# EUROPEAN PATENT SPECIFICATION

(11) **EP 1 787 872 B1**
(45) Date of publication and mention of the grant of the patent: **03.03.2010**
(21) Application number: 06024066.0
(22) Date of filing: 20.11.2006
(51) Int. Cl.: B60R 21/0136

(54) **Collision detection system and protection system using the same**
System zur Kollisionserkennung und darauf basierendes Schutzsystem
Système de détection de collision et système de protection l'utilisant

(30) Priority: 21.11.2005 JP 2005336145
(43) Date of publication of application: 23.05.2007
(73) Proprietor: DENSO CORPORATION, Kariya-city, Aichi-pref. 448-8661 (JP); Hitachi Cable, Ltd., Tokyo 101-8971 (JP)
(72) Inventor: Suzuki, Akira, Kariya-city Aichi-pref. 448-8661 (JP); Iyoda, Motomi, Toyota-city Aichi-pref., 471-8571 (JP); Narita, Sotaro, Toyota-city Aichi-pref., 471-8571 (JP); Nakagawa, Yukio, Toyota-city Aichi-pref., 471-8571 (JP); Abe, Tomiya, Chiyoda-ku Tokyo, 101-8971 (JP)
(74) Representative: Kuhnen & Wacker

(56) References cited:
- EP-A- 1 535 805
- WO-A-03/082639
- DE-B3-102004 022 591
- US-A1- 2004 066 286

## Description

The present invention relates to a collision detection system for detecting a collision, and to a protection system for protecting by using the detection system a passenger in a vehicle or a pedestrian colliding with the vehicle.

JP-H5-116592A discloses a vehicle body collision detection system as a conventional collision detection system for detecting a collision with a vehicle. The vehicle body collision detection system includes an optical fiber, a light emitting device, an optical conversion device, collision sensors, and a collision detection circuit. Each of the collision sensors includes a cylindrical body and protrusions formed at predetermined intervals on the inner surface of the cylindrical body. The optical fiber extends in a loop around the vehicle and through the cylindrical bodies of the collision sensors. When the vehicle is in a collision, so that an external force is exerted on the cylindrical body of at least one of the collision sensors, the protrusions of the sensor bend the optical fiber locally, so that the light transmission characteristic of the fiber changes. As the exerted force increases, the quantity of light transmitted through the optical fiber decreases. The detection of the decrease in the quantity of the light detected by the collision detection circuit makes it possible to detect the collision.

Because of the difference in structure between parts of the vehicle, the load created by a collision to the vehicle transfers in the vehicle in different ways depending on the collision positions, at which the vehicle is collided. Accordingly, even when an equal load is exerted on the vehicle by collisions with different positions on the vehicle, the external forces applied to the cylindrical bodies of the collision sensors differ. In addition, the quantities of light transmitted through the optical fibers decrease differently from one another. This may make it impossible to accurately detect collisions that occur at certain positions on the vehicle.

WO 03/082639 A1 discloses an impact detector for detecting and evaluating an impact and generating an output signal to deploy a pedestrian protection system on a motor vehicle includes a sensor arrangement to be mounted at the front of the vehicle to detect an impact. An evaluator is provided to evaluate the output of the sensor and to generate an output signal when a predetermined threshold is exceeded, so that the pedestrian protection system is not actuated by an impact with a very light object. Additionally a chassis-mounted accelerometer is provided to provide a signal indicative of the total deceleration applied to the vehicle. An inhibitor is provided to inhibit generation of the signal that actuates the pedestrian protection system if the output signal from the accelerometer exceeds a predetermined threshold.

An object of the present invention is to provide a collision detection system that can detect a collision accurately and precisely regardless of the collision position. Another object of the invention is to provide a protection system that can protect a vehicle passenger or a pedestrian accurately and precisely using the collision detection system.

To achieve the objective of the present invention, there is provided a collision detection system, which includes a shock detecting device, a collision position detecting device, a correcting device, and a collision determining device. The shock detecting device detects a magnitude of a shock due to a collision. The collision position detecting device detects a collision position of the collision. The correcting device corrects a detection result detected by the shock detecting device based on a detection result detected by the collision position detecting device. The collision determining device determines the collision based on a corrected result corrected by the correcting device.

To achieve the objective of the present invention, there is also provided a protection system, which includes the collision detection system and a protecting device. The protecting device protects one of a passenger of a vehicle and a pedestrian based on the detection result of the collision position detecting device and a determining result of the collision determining device.

The invention, together with additional objectives, features and advantages thereof, will be best understood from the following description, the appended claims and the accompanying drawings in which:
FIG. 1 is a typical plan view relating to a whole configuration of an air bag system of a first embodiment of the present invention;
FIG. 2 is a perspective view of a periphery of a front bumper shown in FIG. 1;
FIG. 3 is a rear view of a sensor retaining plate shown in FIG. 2;
FIG. 4 is an enlarged sectional view taken along line IV-IV in FIG. 3;
FIG. 5 is a top view of the sensor retaining plate;
FIG. 6 is a rear view of an optical fiber sensor shown in FIG. 2;
FIG. 7 is an enlarged sectional view of a portion of the optical fiber sensor when observed from a rear side thereof;
FIG. 8 is an enlarged sectional view of a portion of the optical fiber sensor when observed from a top side thereof;
FIG. 9 is a top view of the optical fiber sensor;
FIG. 10 is a typical sectional view of a touch sensor of the first embodiment;
FIG. 11 is an enlarged sectional view taken along line XI-XI in FIG. 10;
FIG. 12 is a typical sectional view of the touch sensor, which is collided by a body;
FIG. 13 is an enlarged sectional view taken along line XIII-XIII in FIG. 12;
FIG. 14A is a circuit diagram for detecting a collision of the body using the touch sensor;
FIG. 14B is a circuit diagram for detecting the collision of the body using the touch sensor;
FIG. 15 is a rear view of the sensor retaining plate assembled with the optical fiber sensor and the touch sensors of the first embodiment;
FIG. 16 is a front view of the sensor retaining plate assembled with the optical fiber sensor and the touch sensors;
FIG. 17 is a top view of the sensor retaining plate assembled with the optical fiber sensor and the touch sensors;
FIG. 18 is an enlarged sectional view taken along line XVIII-XVIII in FIG. 17;
FIG. 19 is a sectional view of the periphery of the front bumper;
FIG. 20 is a diagram of a collision detection circuit of the first embodiment;
FIG. 21 is an explanatory drawing showing an operation of a pedestrian collision detection system in the first embodiment;
FIG. 22 is a front view of a sensor retaining plate assembled with touch sensors in a different arrangement;
FIG. 23 is an enlarged sectional view of a portion of the mat sensor of a second embodiment of the present invention;
FIG. 24 is a sectional view taken along line XXIV-XXIV in FIG. 23;
FIG. 25 is a sectional view of a portion of the mat sensor collided by the body;
FIG. 26 is a front view of the sensor retaining plate assembled with the mat sensor; and
FIG. 27 is an explanatory drawing showing an operation of a pedestrian collision detection system in the second embodiment.

A collision detection system according to the present invention is embodied by a pedestrian collision detection system for detecting a pedestrian's collision with a bumper. A protection system according to the preferred embodiment of the present invention is embodied by an air bag system for protecting a pedestrian colliding with a bumper by using the pedestrian collision detection system.

### (First Embodiment)

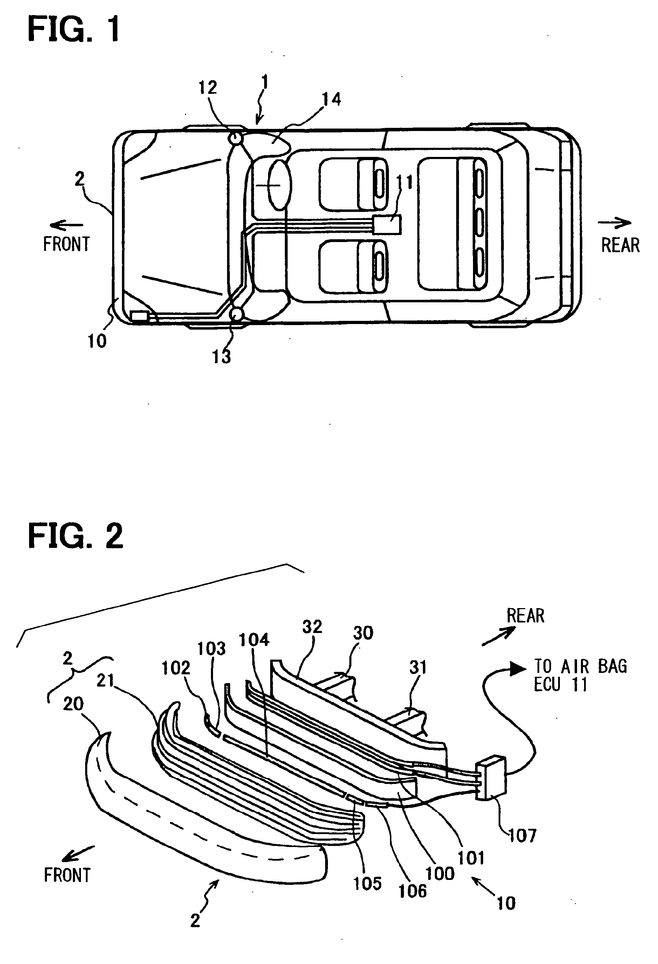

With reference to FIGS. 1 - 21, a structure, an operation and advantages of the first embodiment of the present invention will be described. First, the structure of the first embodiment will be described in detail. With reference to FIG. 1, an air bag system 1 (protection system) protects a pedestrian colliding with a front bumper 2 of a vehicle and includes a pedestrian collision detection system 10 (collision detection system), an air bag ECU 11 (protecting device), pillar air bag inflators 12 and 13, and a pillar air bag 14.

The pedestrian collision detection system 10 is fitted (provided) near the front bumper 2 and detects a pedestrian's collision with the bumper 2. Based on a detection result output from the pedestrian collision detection system 10, the air bag ECU 11 outputs an ignition signal for inflating the pillar air bag 14. The air bag ECU 11 is fitted at the center of the vehicle. The pillar air bag inflators 12 and 13 are respectively fitted near the right and left front pillars of the vehicle. Based on the ignition signal from the air bag ECU 11, the pillar air bag inflators 12 and 13 inflate the pillar air bag 14 over a window shield of the vehicle so as to protect a pedestrian colliding with the front bumper 2. The pillar air bag 14 is fitted near the front pillars. The pedestrian collision detection system 10 and the pillar air bag inflators 12 and 13 are connected electrically to the air bag ECU 11.

As shown in FIG. 2, the pedestrian collision detection system 10 includes a sensor retaining plate 100, an optical fiber sensor 101 (shock detecting device), touch sensors 102 - 106 (collision position detecting device), and a collision detection circuit 107. The front bumper 2 includes a bumper cover 20 and an energy absorber (bumper absorber) 21. The front bumper 2 is fitted to a bumper reinforcement 32, which is fixed to fore end portions of side members 30 and 31 that serve as parts of the vehicle body. End portions of the bumper reinforcement 32 curve backward along the front bumper 2. The bumper cover 20 is fixed to the energy absorber 21, which is fixed to the bumper reinforcement 32. The optical fiber sensor 101 and the touch sensors 102 - 106 are positioned between the energy absorber 21 and the bumper reinforcement 32, and are retained by the sensor retaining plate 100. The optical fiber sensor 101 is connected optically to the collision detection circuit 107. The touch sensors 102 - 106 are connected electrically to the collision detection circuit 107. The collision detection circuit 107 is connected electrically to the air bag ECU 11.

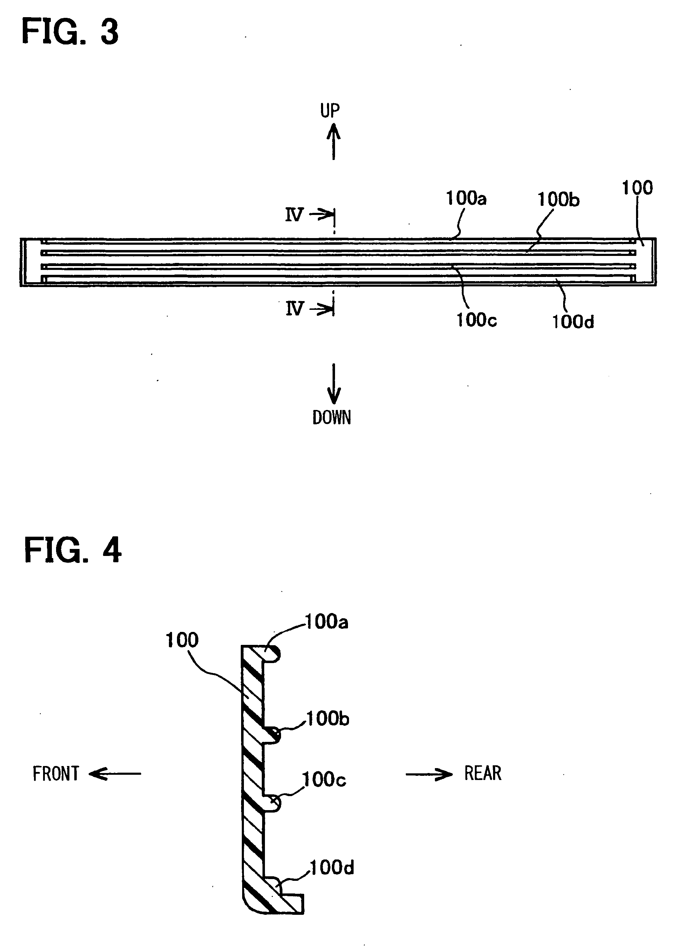

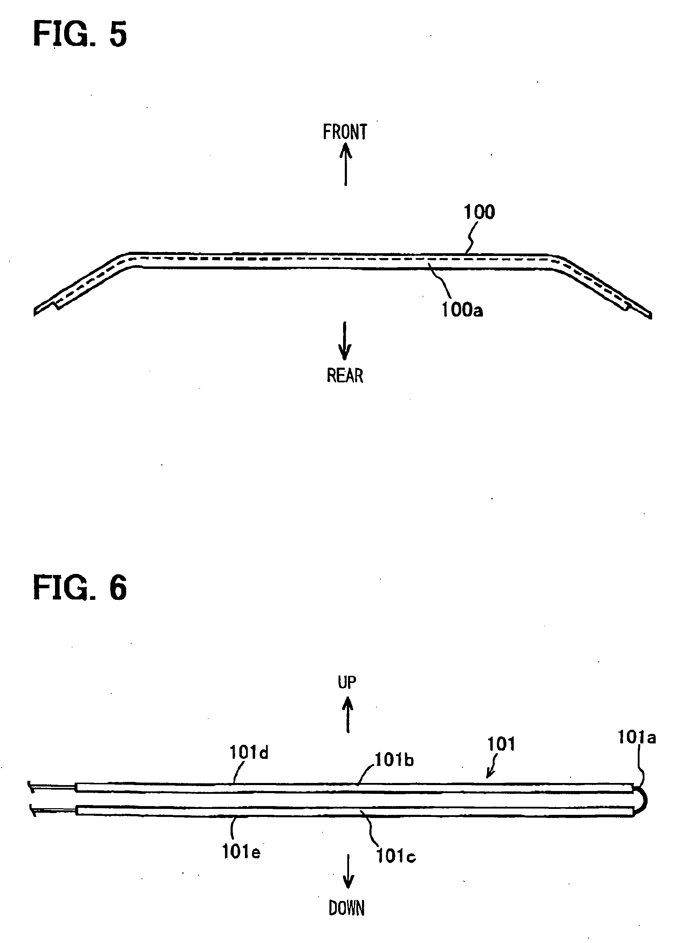

The pedestrian collision detection system 10 will be described below in detail. The sensor retaining plate 100 is a resinous, generally rectangular plate for retaining the optical fiber sensor 101. As shown in FIGS. 3 and 4, the sensor retaining plate 100 has on a rear side (aft side) thereof ribs 100a - 100d, which project in an aft direction, and which extend in a longitudinal direction of the sensor retaining plate 100. Here, the longitudinal direction of the sensor retaining plate 100 is generally a transverse direction of the vehicle. The ribs 100a - 100d hold the optical fiber sensor 101. A dimension between the ribs 100a and 100b and a dimension between the ribs 100c and 100d are designed such that the ribs can securely hold the optical fiber sensor 101. As shown in FIG. 5, end portions of the sensor retaining plate 100 curve backward along the bumper reinforcement 32. A dimension between the front and rear sides (fore and aft surfaces) of the rib 100a is equal at any position in the longitudinal direction of the sensor retaining plate 100 (i.e., the projecting length of the rib 100a is equal at any position in the longitudinal direction of the sensor retaining plate 100). A dimension between the front and rear sides of each of the ribs 100b - 100d is equal at any position in the longitudinal direction of the corresponding rib 100b - 100d, and is equal to a dimension between the front and rear sides of the rib 100a.

When the load created by the shock of the collision is exerted on the optical fiber sensor 101, the quantity of light transmitted by this sensor decreases. As shown in FIG. 6, the optical fiber sensor 101 includes an optical fiber 101 a, load concentration plates 101 b and 101 c, and load transfer members 101 d and 101 e.

The light is transmitted through the optical fiber 101 a. When the optical fiber 101 a is bent under a load, a light transmission characteristic of the fiber 101 a changes, so that the quantity of light transmitted through the fiber 101 a decreases. The optical fiber 101 a is turned back to have a U-shape. The load concentration plate 101 b and the load transfer member 101d are assembled with an upper located portion of the optical fiber 101 a. The load concentration plate 101c and the load transfer member 101 e are assembled with an lower located portion of the optical fiber 101 a.

The load concentration plates 101 b and 101 c are identical in structure. The load transfer members 101 d and 101 e are identical in structure. Thus, only the load concentration plate 101b and the load transfer member 101d will be described below.

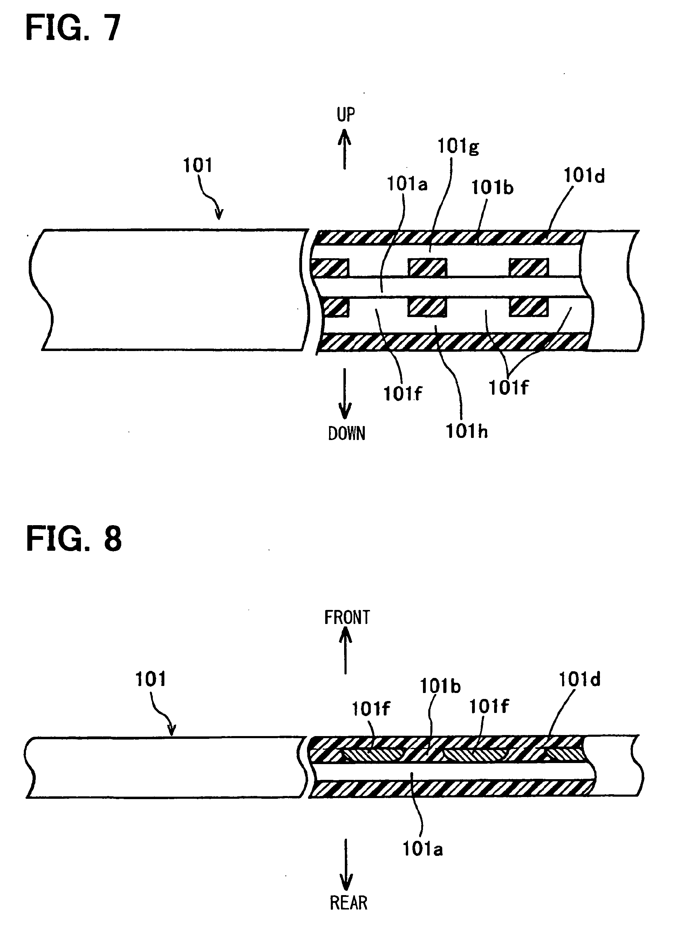

The load concentration plate 101 b is a generally rectangular plate, which may be metallic, and concentrates load locally to the optical fiber 101 a so that the optical fiber 101 a can be bent reliably. As shown in FIGS. 7 and 8, the load concentration plate 101b includes multiple protrusions 101f arranged at regular intervals and connectors 101 g, 101 h, which connect both ends of the protrusions 101f. The back surfaces of the protrusions 101f contact the optical fiber 101 a.

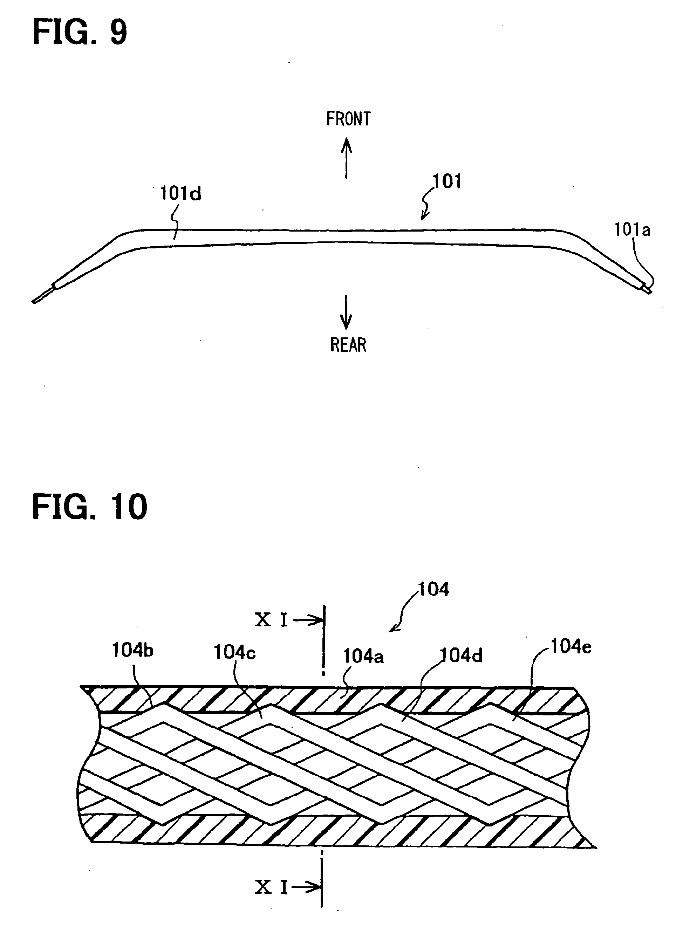

The load transfer member 101 d is a generally rectangular parallelepiped, which may be made of elastic silicon resin, and transfers to the optical fiber 101 a the load created by the shock of the collision. The load transfer member 101d surrounds the optical fiber 101 a and the load concentration plate 101 b. As shown in FIG. 9, end portions of the load transfer member 101 d curve backward along the bumper reinforcement 32. The dimension between the front and back sides of the load transfer member 101d (i.e., a projection length of the load transfer member 101d) is equal at any position in the longitudinal direction of the load transfer member 101 d, and is larger than that of the ribs 100a and 100b.

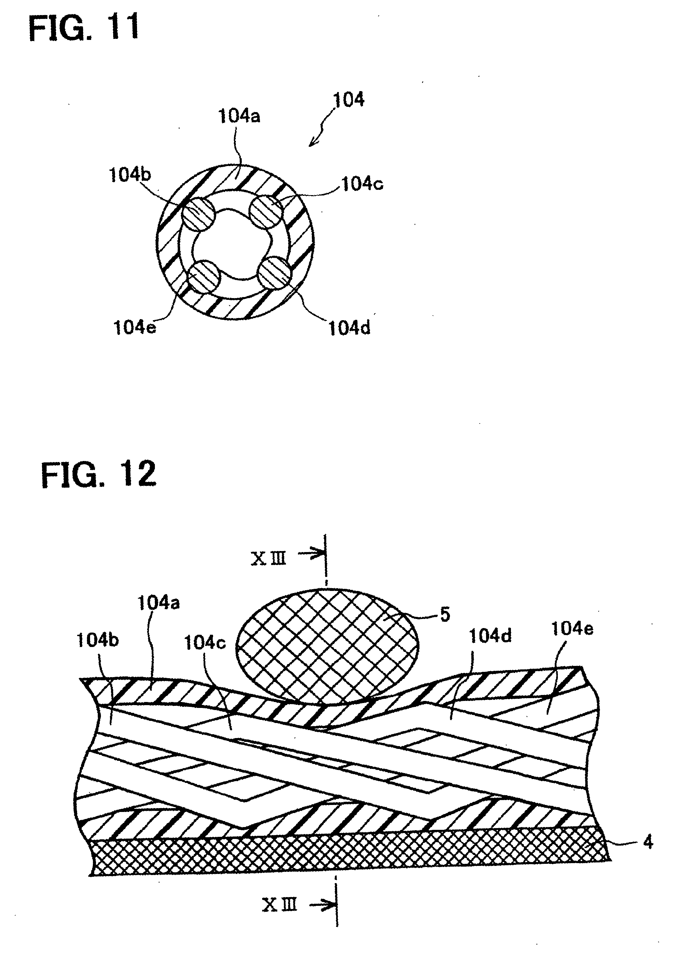

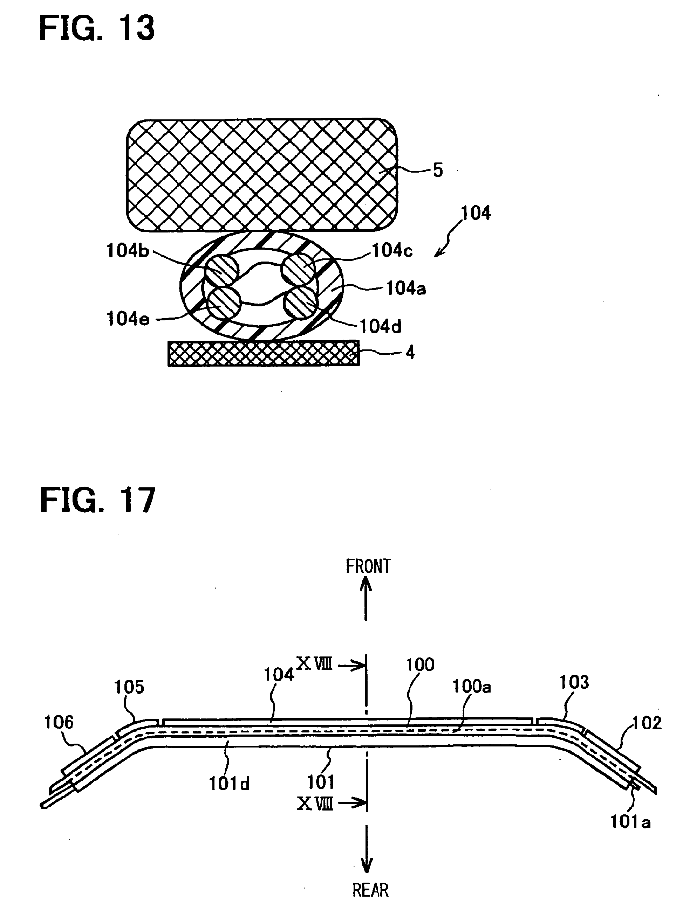

Each of the touch sensors 102 - 106 has a contact that can be turned on by the shock of a collision (i.e., each touch sensor 102 - 106 serves as one of a plurality of contacts of the invention, the contacts being turned on by the shock of the collision). Because the touch sensors 102 - 106 are identical in structure, only the touch sensor 104 will be described below. As shown in FIGS. 10 and 11, the touch sensor 104 includes an elastic cylindrical electrical insulator 104a and wire electrodes 104b - 104e, which extend spirally on an inner peripheral surface of the insulator 104a. The electrodes 104b, 104d are positioned opposite from each other on the inner peripheral surface of the insulator 104a. The electrodes 104c, 104e are positioned opposite from each other on the inner peripheral surface of the insulator 104a. One end of the electrode 104b is connected electrically to one end of the electrode 104c. One end of the electrode 104d is connected electrically to one end of the electrode 104e. As shown in FIGS. 12 and 13, the touch sensor 104 is fitted on a rigid base member 4. When a body 5 collides with the touch sensor 104 at a position that is located between both ends of the touch sensor 104, the shock of the collision deforms the insulator 104a. This brings the electrodes 104b and 104e into contact with each other, which extend spirally on the inner peripheral surface of the insulator 104a. This also brings the electrodes 104c and 104d into contact with each other, which extend spirally on the inner peripheral surface of the insulator 104a.

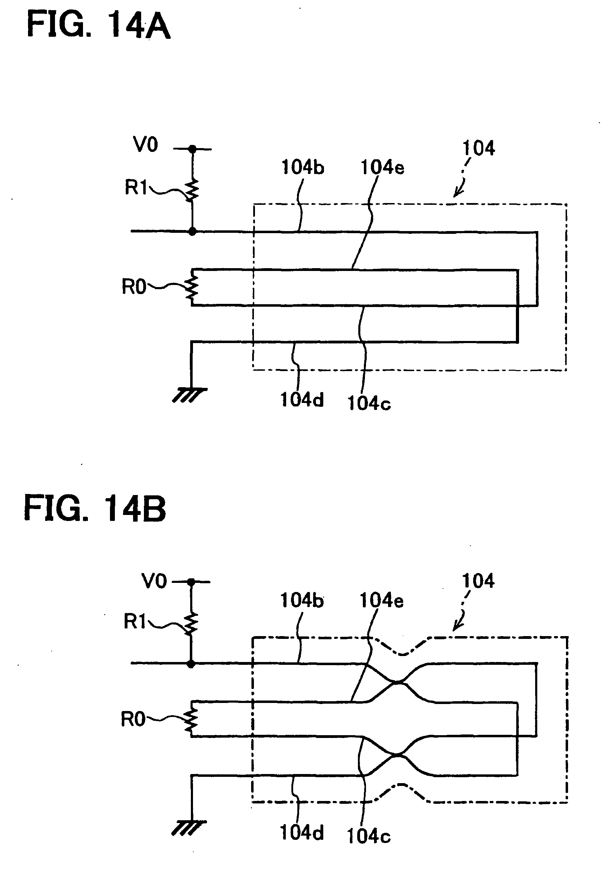

The contact of the electrodes 104b - 104e can be detected by a circuit as shown in FIGS. 14A and 14B, for example. The other ends of the electrodes 104c and 104e are connected via a resistor R0. The other end of the electrode 104d is grounded. The other end of the electrode 104b is connected to a power supply V0 via a resistor R1. When the electrodes 104b - 104e are out of contact with one another, as shown in FIG. 14A, the voltage at the other end of the electrode 104b is a voltage calculated using the voltage of the power supply V0, the resistors R0 and R1. When a shock is applied to the touch sensor 104 at a position that is located between both ends of this sensor, the electrodes 104b and 104c are brought into contact with the electrodes 104e and 104d respectively, as shown in FIG. 14B. Thus, the other end of the electrode 104b is grounded so that the voltage at this end becomes 0 volt. Thus, it is possible to detect the contact of the electrodes 104b - 104e as a voltage change.

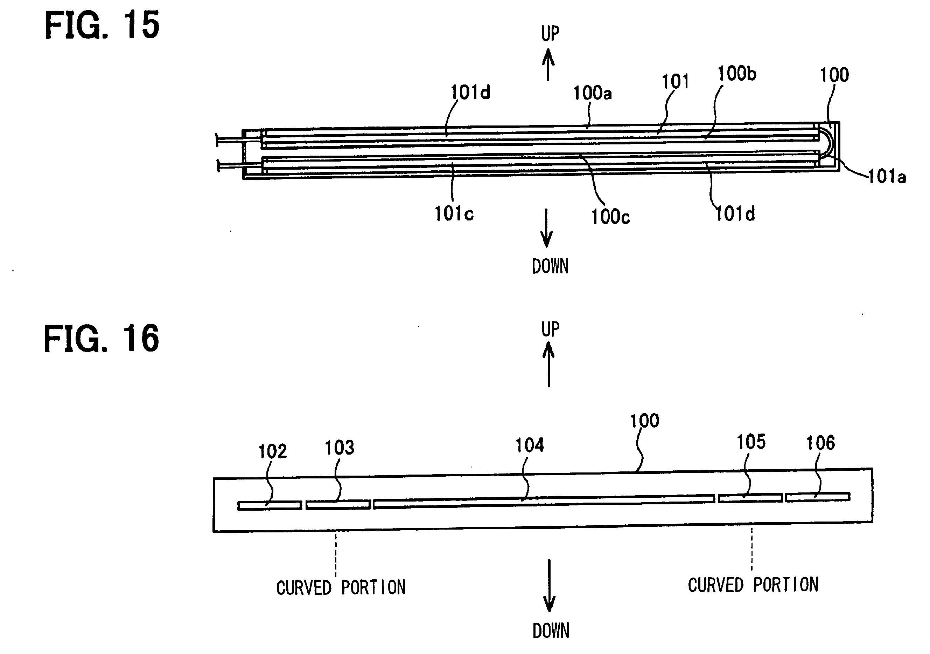

As shown in FIGS. 15 - 18, the optical fiber sensor 101 is fitted on the back surface of the sensor retaining plate 100. The load transfer member 101d is fitted (assembled) between the ribs 100a, 100b and extends along them, in a state, where its curved portions extend along the curved portions of the sensor retaining plate 100. The load transfer member 101 e is assembled between the ribs 100c, 100d and extends along them in a state, where its curved portions extend along the curved portions of the sensor retaining plate 100. The load transfer members 101 d, 101 e project backward from the ribs 100a - 100d at any position in the longitudinal direction of the load transfer members 101 d, 101 e.

The touch sensors 102 -106 are provided on the front surface of the sensor retaining plate 100 to extend along the plate 100, and are adjacently arranged relative to one another in the longitudinal direction of the plate 100. The touch sensors 102, 106 are positioned at a right end portion and a left end portion respectively of the sensor retaining plate 100. The touch sensors 103, 105 are positioned at the right and left curved portions respectively of the sensor retaining plate 100. The touch sensor 104 is positioned at a middle portion of the sensor retaining plate 100. This makes it possible to detect which of the right and left end portions, the right and left curved portions, and the middle portion of the sensor retaining plate 100 a shock is applied to.

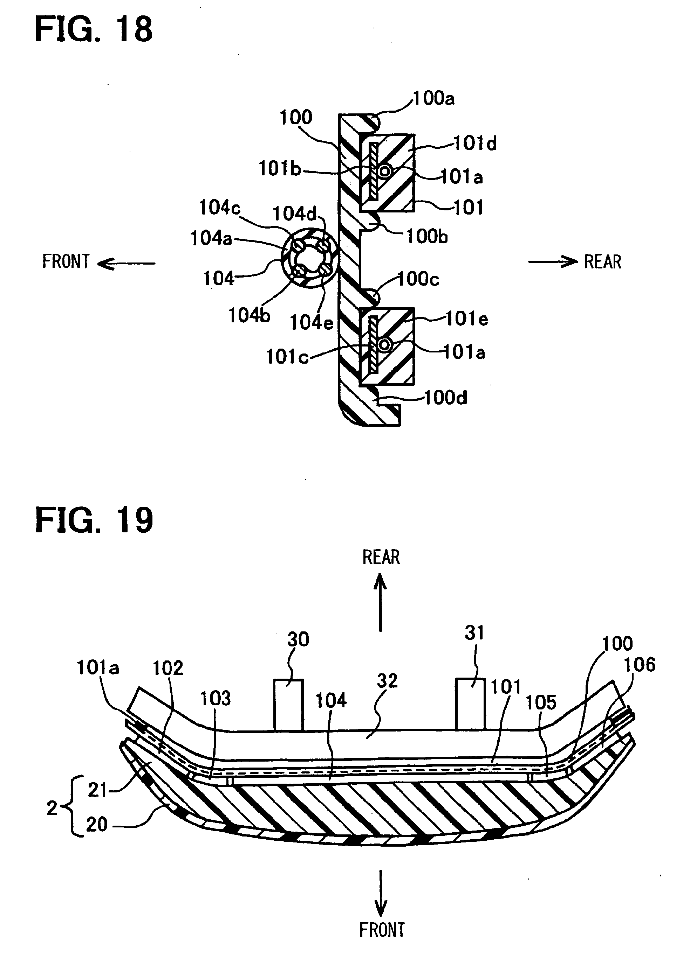

As shown in FIG. 19, the optical fiber sensor 101 and touch sensors 102 - 106, which are fitted to the sensor retaining plate 100, are positioned between the energy absorber 21 and the bumper reinforcement 32. The optical fiber sensor 101 is positioned between the sensor retaining plate 100 and the bumper reinforcement 32. The touch sensors 102 - 106 are positioned between the sensor retaining plate 100 and the energy absorber 21. The curved portions of the optical fiber sensor 101 and the touch sensors 103, 105 extend along the curved portions of the bumper reinforcement 32.

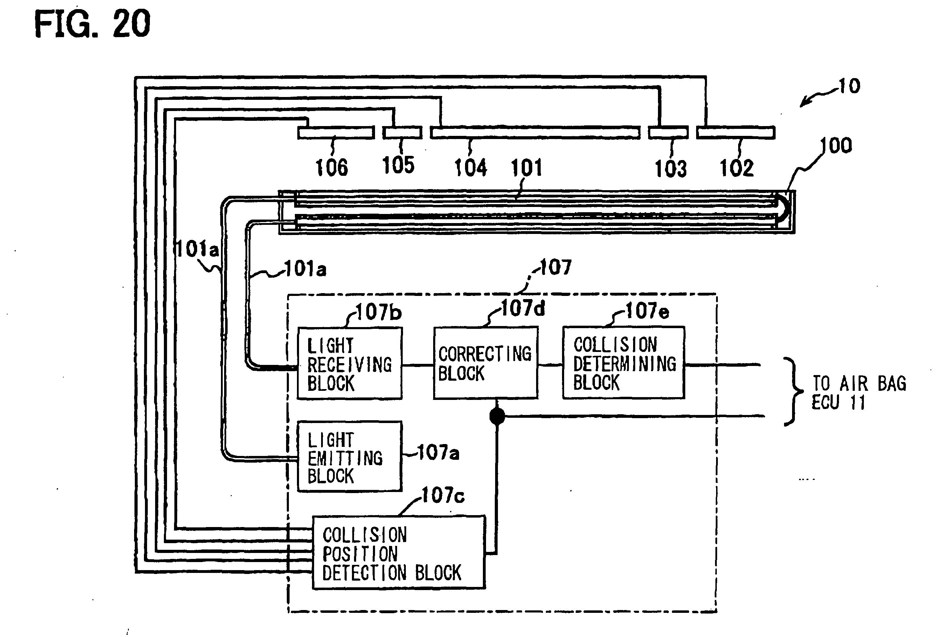

The collision detection circuit 107 emits light, which is transmitted to the optical fiber sensor 101. Based on the quantity of light transmitted by the optical fiber sensor 101, the collision detection circuit 107 detects a pedestrian's collision with the front bumper 2. As shown in FIG. 20, the collision detection circuit 107 includes a light emitting block 107a (shock detecting device), a light receiving block 107b (shock detecting device), a collision position detection block 107c (collision position detecting device), a correcting block 107d (correcting device), and a collision determining block 107e (collision determining device).

The light emitting block (portion) 107a emits light, which is supplied to the optical fiber 101 a. The light emitting block 107a is connected optically to one end of the optical fiber 101 a. The light receiving block (portion) 107b detects the quantity of light transmitted through the optical fiber 101 a. The light receiving block 107b outputs to the collision determining block (portion) 107e a signal having a magnitude equivalent to the transmitted quantity of light. The light receiving block 107b is connected optically to the other end of the optical fiber 101 a.

Based on voltage changes at the touch sensors 102 - 106, the collision position detection block (portion) 107c detects a collision position. The collision position detection block 107c outputs a signal representing the collision position to the correcting block (portion) 107d and the air bag ECU 11. The collision position detection block 107c is connected electrically to the touch sensors 102 - 106 and the air bag ECU 11.

Based on an output signal from the collision position detection block 107c, the correcting block 107d corrects an output signal from the light receiving block 107b. Depending on the collision position, the correcting block 107d shifts a signal outputted from the light receiving block 107b by a preset (predetermined) amount, and outputs the shifted signal. That is, in one embodiment, depending on the collision position, the correcting block 107d corrects (changes) an amount, which is indicated by the signal outputted from the light receiving block 107b, by the preset amount, and outputs the corrected signal. The correcting block 107d is connected electrically to the light receiving block 107b, the collision position detection block 107c, and the collision determining block 107e.

Based on the corrected signal from the correcting block 107d, the collision determining block 107e determines a pedestrian's collision with the front bumper 2 (shown in FIG. 19). For example, when the magnitude of the output signal from the correcting block 107d is equal to or larger than a preset (predetermined) value, the collision determining block 107e determines that the pedestrian collides with the front bumper 2. The collision determining block 107e is connected electrically to the correcting block 107d and the air bag ECU 11.

The optical fiber sensor 101, the light emitting block 107a, and the light receiving block 107b correspond to the shock detecting device in the present invention. The touch sensors 102 - 106 and the collision position detection block 107c correspond to the collision position detecting device in this invention.

Next, the operation of the first embodiment will be described in detail. With reference to FIG. 19, when a pedestrian collides with the bumper cover 20, the load created by the collision shock is applied through the energy absorber 21 to the touch sensors 102 - 106. The load application turns on a corresponding one of the touch sensor 102, 103, 104, 105, or 106 correspondingly to the collision position. The load is also applied through the sensor retaining plate 100 to the optical fiber sensor 101. With reference to FIG. 18, the load on the optical fiber sensor 101 is transferred through the load transfer members 101 d, 101 e and the load concentration plates 101 b, 101 c to the optical fiber 101 a. Depending on the magnitude of the transferred load, the optical fiber 101 a bends locally, so that the quantity of light transmitted through the fiber 101 a decreases.

Even when the same load is applied to the front bumper 2 by the shocks of collisions, the load transferred to the optical fiber 101 a varies greatly with different positions of the front bumper 2, to which positions the load is applied. The transferred load is higher away from the middle portion toward the curved portions, and is the highest at the curved portions. Also, the transferred load is lower away from the curved portions toward the end portions, and is the lowest at the end portions. This is caused because the transferred load is reduced at the middle and end portions by deformation of the bumper reinforcement 32 or the like. The quantity of light transmitted through the optical fiber 101 a varies greatly with the load transferred to it.

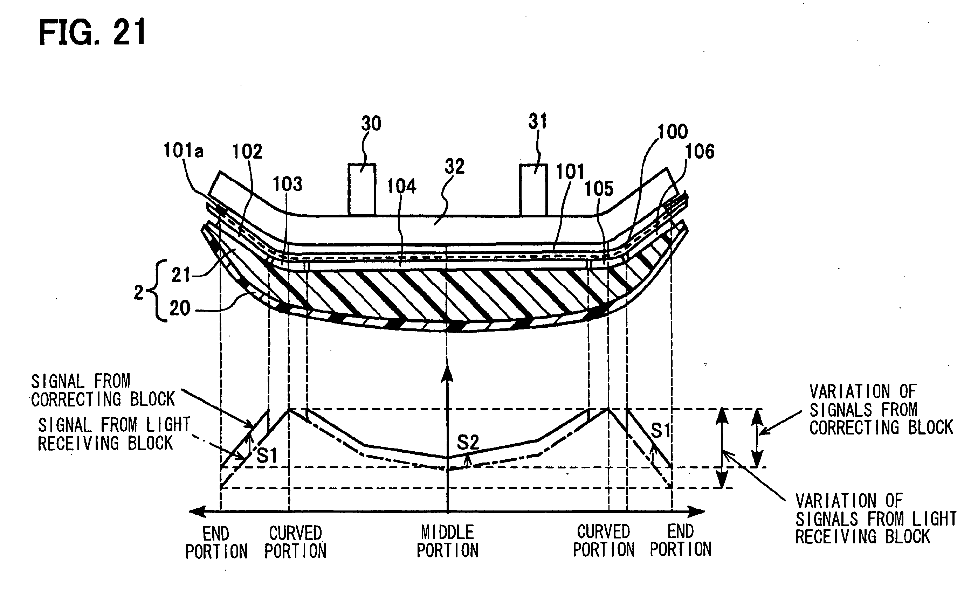

With reference to FIG. 20, based on the voltage change at the touch sensor 102, 103, 104, 105, or 106 turned on by the shock of the collision, the collision position detection block 107c detects the position where the collision has occurred. Then, the collision position detection block 107c outputs a signal representing the collision position. The light receiving block 107b outputs a signal indicative of a magnitude equivalent to the quantity of light transmitted through the optical fiber 101 a. As shown in FIG. 21, the output signal from the light receiving block 107b indicates larger away from the middle portion toward the curved portions, and is the largest at the curved portions. Also the output signal indicates smaller away from the curved portions toward the end portions, and is the smallest at the end portions, similarly to the load transmitted to the optical fiber 101 a.

With reference to FIG. 20, based on the collision position signal outputted from the collision position detection block 107c, the correcting block 107d corrects the output signal from the light receiving block 107b and outputs the corrected signal. With reference to FIG. 21, when the touch sensor 102 or 106 is turned on, the correcting block 107d shifts the output signal from the light receiving block 107b, for example, by a preset amount S1, and outputs the shifted signal. When the touch sensor 104 is turned on, the correcting block 107d shifts the output signal from the light receiving block 107b by a preset amount S2 and outputs the shifted signal. That is, in one embodiment, when the touch sensor 104 is turned on due to the collision of an object to a corresponding position of the bumper 2, the correcting block 107d changes an amount indicated by the output signal from the light receiving block 107b by a preset amount S2, and the correcting block 107d outputs the corrected signal. Returning to the description of the present embodiment, when the touch sensor 103 or 105 is turned on, the correcting block 107d outputs the output signal from the light receiving block 107b without shifting the signal.

With reference to FIG. 20, when the magnitude of the output signal from the correcting block 107d is not lower than (i.e., is equal to or larger than) the preset value, the collision determining block 107e determines that a pedestrian is colliding with the front bumper 2. When the collision determining block 107e determines that the pedestrian collides with the front bumper 2, and when the collision position detection block 107c detects the collision position, with reference to FIG. 1, the air bag ECU 11 outputs an ignition signal, which causes the pillar air bag inflators 12, 13 to inflate the pillar air bag 14, thereby protecting the colliding pedestrian.

Lastly, the advantages of the first embodiment will be described in detail. The pedestrian collision detection system 10 can detect the pedestrian's collision with the front bumper 2 accurately and precisely, regardless of the collision position. When the pedestrian collides with the vehicle, the shock of the collision causes a load to be transferred to the optical fiber sensor 101. Even when the same load is applied to the front bumper 2 by the shock of the collision, the transferred load varies greatly with the different collision positions due to deformation of the bumper reinforcement 32 or the like. That is, the collision shock detected by the shock detecting device varies with a route, through which the shock is transmitted. Accordingly, as shown in FIG. 21, the output signal from the light receiving block 107b varies greatly. It is possible to reduce the signal variation (i.e., the difference of the magnitude among detection result for different collision positions) by correcting the output signal from the light receiving block 107b based on the collision position signal from the collision position detection block 107c. Therefore, the determination based on the corrected signal from the correcting block 107d makes it possible to detect the pedestrian's collision with the front bumper 2 accurately and precisely, regardless of the collision position.

By having touch sensors 102 - 106 that can be turned on by the shock of the collision, the pedestrian collision detection system 10 can reliably detect the collision position.

The air bag system 1 can accurately and reliably detect and protect the pedestrian colliding with the front bumper 2. It is possible to improve protection reliability for protecting the pedestrian using the air bag system 1 by determining the collision based not only on the determination result from the collision determining block 107e but also on the collision position detection result from the collision position detection block 107c to output an ignition signal. Also, because the touch sensors 102 - 106 and the collision position detection block 107c also function as a conventional safing sensor, the need for the safing sensor can be limited, thereby reducing the cost.

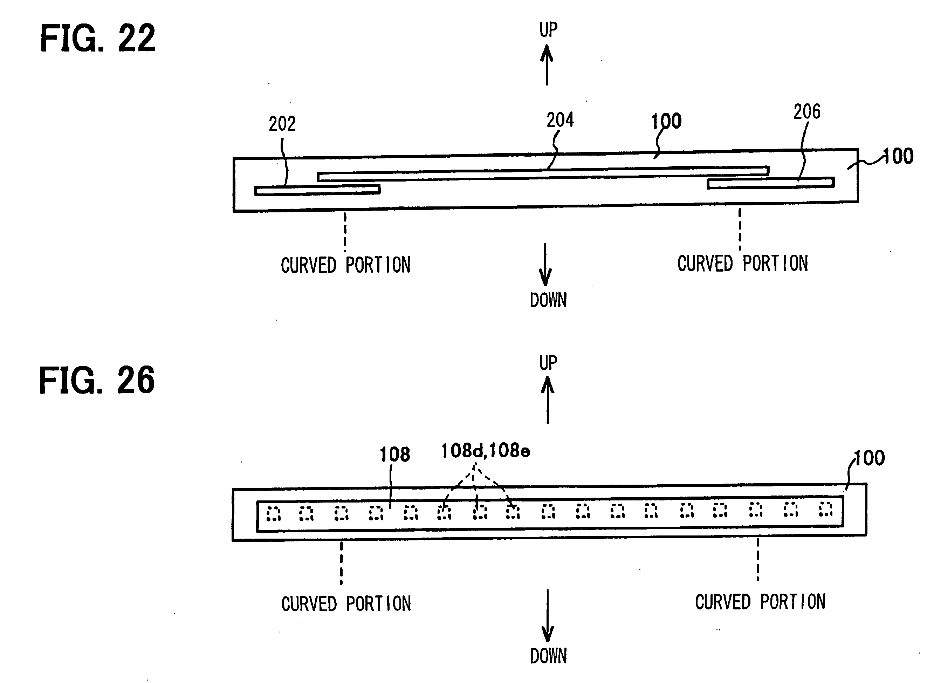

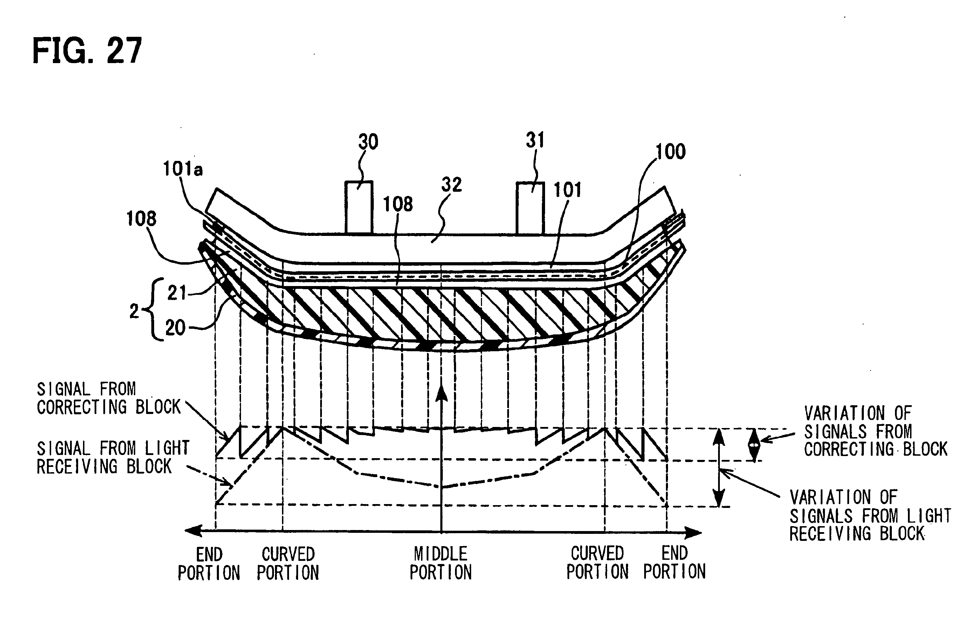

The touch sensors 102, 106 are, respectively, adjacent to the right and left end portions of the sensor retaining plate 100. The touch sensors 103, 105 are, respectively, adjacent to the right and left curved portions of the sensor retaining plate 100. The touch sensor 104 is adjacent to the middle portion of the sensor retaining plate 100. This is an example of touch sensor arrangement, to which the touch sensor arrangement of the present invention is not limited. FIG. 22 shows another example of touch sensor arrangement. In FIG. 22, a sensor retaining plate 100 retains touch sensors 202, 204, and 206. The touch sensors 202 extends from the left end portion of the sensor retaining plate 100 to the left curved portion of the plate 100 as shown in FIG. 27. Also, the touch sensors 206 extends from the right end portion of the sensor retaining plate 100 to the right curved portion of the plate 100 as shown in FIG. 27. The touch sensor 204 extends between the curved portions. The detection regions overlap at the curved portions. That is, at least one of the plurality of contacts 202, 204, 206 has the detection region, which overlaps with that of anther one of the plurality of contacts 202, 204, 206. This makes it possible to detect the collision position more effectively based on combination of state (on and off state) of the touch sensors 202, 204, and 206. Detection resolution of the detection system, the resolution for detecting the collision position, can be improved without increasing the number of touch sensors 202, 204, and 206.

### (Second Embodiment)

An air bag system of the second embodiment is substantially identical with that of the first embodiment, but the pedestrian collision detection system in the second embodiment has a mat sensor in place of the touch sensors in the first embodiment. A description will be provided below only for the mat sensor, which is a component of the pedestrian collision detection system of the second embodiment that differs from the counterpart in the first embodiment. No description will be provided for the common parts that do not need to be described. The elements of the second embodiment that are identical with the counterparts of the first embodiment will be assigned the same reference numerals as the counterparts are assigned.

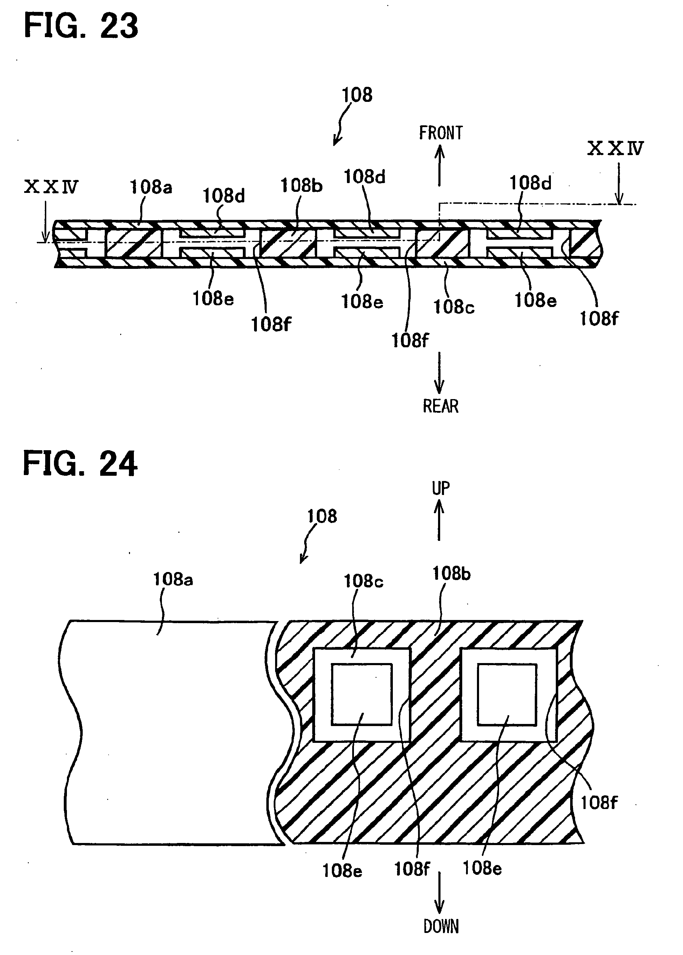

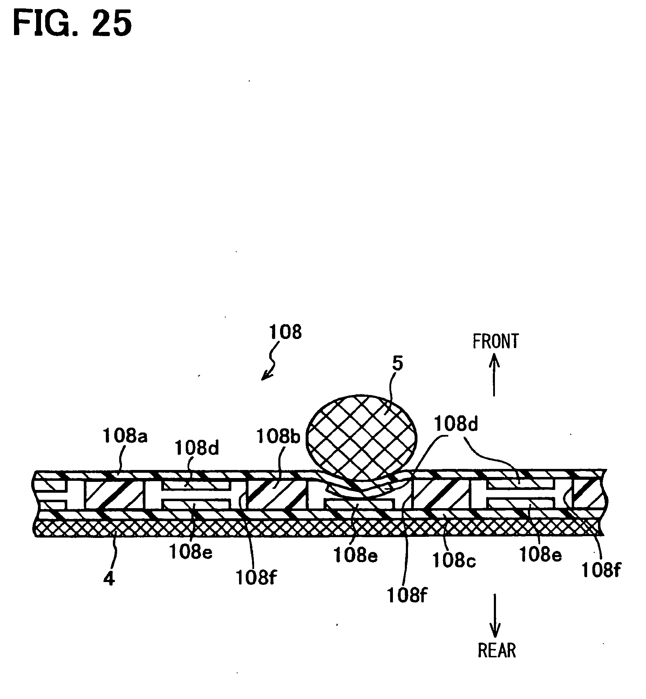

First, the structure of the second embodiment will be described in detail with reference to FIGS. 23 - 26. The mat sensor 108 of the present embodiment has contacts (e.g., seventeen contacts in the present embodiment) that can be turned on by shocks. Thus, collision position detection regions are located at seventeen positions in the present embodiment. As shown in FIGS. 23 and 24, the mat sensor 108 includes elastic electrical insulators 108a - 108c in the form of rectangular plates, seventeen electrodes 108d in the form of square plates, and seventeen electrodes 108e in the form of square plates. The insulators 108a - 108c are laminated together, with the insulator 108b interposed between the insulators 108a and 108c. The insulator 108b has seventeen square holes 108f arranged relative to each other at regular intervals in the longitudinal direction. The electrodes 108d, 108e are respectively formed on surfaces of the insulators 108a, 108c. Each of the electrodes 108d and a corresponding one of the electrodes 108e are positioned in a corresponding one of the square holes 108f such that each of the electrodes 108d faces the corresponding one of the electrodes 108e. A pattern (not shown) for electrically connecting the electrodes 108d and 108e to the collision position detection block 107c is formed. As shown in FIG. 25, the insulator 108c is fixed on the rigid base member 4. When the body 5 collides with and applies the shock to the mat sensor 108 at any position thereof in the longitudinal direction, an area of the insulator 108a corresponding to the collision position deforms so that a corresponding electrode 108d that is positioned at the surface of the above deformed area contacts a corresponding electrode 108e. The contact between the two corresponding electrodes 108d, 108e can be detected similarly to the first embodiment.

As shown in FIG. 26, the mat sensor 108 extends along the sensor retaining plate 100 on the front side of the sensor retaining plate 100 in a state the insulator 108a faces the fore direction and the insulator 108c faces the aft direction of the vehicle. This makes it possible to detect which of the seventeen areas in the longitudinal direction of the mat sensor 108 a shock is applied to.

The mat sensor 108 and the collision position detection block 107c correspond to the collision position detecting device of the present invention.

Next, the operation of the second embodiment will be described in detail. The other components other than the correcting block 107d of this embodiment operate in the same manner as in the first embodiment, and therefore an operation of the other components will not be described. A description will be provided below of the operation of the correcting block 107d for the output signal from the light receiving block 107b. As shown in FIG. 27, when any one pair of electrodes 108d and 108e in the right or left curved portion of the mat sensor 108 is turned on, the correcting block 107d outputs the same output signal, which is the same as the output signal outputted from the light receiving block 107b, without shifting the signal. When any one pair of electrodes 108d, 108e in one of the other portions of the mat sensor 108, other than the above curved portion, is turned on, the correcting block 107d shifts the output signal from the light receiving block 107b by a corresponding preset amount, and outputs the shifted signal.

Lastly, the advantage of the second embodiment will be described in detail. It is possible to correct the output signal from the light receiving block 107b more effectively by increasing the number of the collision position detection regions to seventeen in the present embodiment from five in the first embodiment. This makes it possible to further reduce the output signal variation among collision positions, thereby further improving the collision detection accuracy of the detection system.

In each of the two embodiments, the optical fiber sensor 101 is used as a sensor for sensing the magnitude of the collision shock. However, the sensor for sensing the magnitude of the collision shock is not limited to the optical fiber sensor 101 but may be a strain gauge, a pressure sensor, or an acceleration sensor, which can sense a collision shock likewise with similar advantage.

In each of the two embodiments, the pedestrian collision detection system 10 detects the pedestrian's collision with the front bumper 2 of the vehicle. However, the collision detection system according to the present invention is not limited to the pedestrian collision detection system 10 but can also be applied to any other collision objects than pedestrians, and to collisions in any other directions than the forward direction, such as a left-right direction collision, a backward collision.

Additional advantages and modifications will readily occur to those skilled in the art. The invention in its broader terms is therefore not limited to the specific details, representative apparatus, and illustrative examples shown and described.

## Claims

1. A collision detection system comprising:
a shock detecting device (101, 107a, 107b) that detects a magnitude of a shock due to a collision;
a collision position detecting device (102 - 106, 202, 204, 206, 107c, 108) that detects a collision position of the collision on a bumper reinforcement (32);
a correcting device (107d) that corrects a detection result detected by the shock detecting device (101, 107a, 107b) based on a detection result detected by the collision position detecting device (102 - 106, 202, 204, 206, 107c, 108); and
a collision determining device (1 07e) that determines the collision based on a corrected result corrected by the correcting device (107d).

2. The collision detection system according to claim 1, wherein:
the collision position detecting device (102 - 106, 202, 204, 206, 107c, 108) includes a plurality of contacts, each of which is turned on by the shock of the collision.

3. The collision detection system according to claim 2, wherein:
at least one of the plurality of contacts (202, 204, 206) has a fist detection region, which overlaps with a second detection region of another one of the plurality of contacts (202, 204, 206);
the at least one of the plurality of contacts (202, 204, 206) is turned on when the shock of the collision is applied to the first detection region; and
the another one of the plurality of contacts (202, 204, 206) is turned on when the shock of the collision is applied to the second detection region.

4. The collision detection system according to any one of claims 1 through 3, wherein:
the shock detecting device (101, 107a, 107b) includes at least one of an optical fiber (101 a), a strain gauge, a pressure sensor, and an acceleration sensor.

5. The collision detection system according to any one of claims 1 through 4, the collision detection system further comprising:
a vehicle, on which the collision detection system is mounted, wherein the collision detection system detects the collision to the vehicle.

6. The collision detection system according to claim 1, further comprising:
a bumper (2) of a vehicle, wherein the shock detecting device (101, 107a, 107b) is coupled to the bumper (2) of the vehicle.

7. The collision detection system according to claim 2, wherein:
each of the plurality of contacts is turned on to detect a corresponding collision position when the shock of the collision is applied to the corresponding collision position.

8. A protection system comprising:
the collision detection system according to any one of claims 1 through 7; and
a protecting device (11 - 14) that protects one of a passenger of a vehicle and a pedestrian based on the detection result of the collision position detecting device (102 -106, 202, 204, 206, 107c, 108) and a determining result of the collision determining device (107e).

9. The collision detection system according to claim 1, wherein the collision position on the bumper reinforcement (32) corresponds to one of a right end portion, a left end portion, a right curved portion, a left curved portion, and a middle portion of the bumper reinforcement (32).

10. The collision detection system according to claim 1, wherein the correcting device (107d) is inhibited from correcting the detection result detected by the shock detecting device (101, 107a, 107b) when the detection result detected by the collision position detecting device (102-106, 202, 204, 206, 107c, 108) indicates the collision position, which corresponds to a cuved portion of the bumper reinforcement (32).

## Patentansprüche

1. Kollisionserfassungssystem, aufweisend:
eine Stoßerfassungsvorrichtung (101, 107a, 107b), die ein Ausmaß eines Stoßes aufgrund einer Kollision erfasst;
eine Kollisionspositionserfassungsvorrichtung (102-106, 202, 204, 206, 107c, 108), die eine Kollisionsposition der Kollision auf einer Stoßfängerverstärkung (32) erfasst;
eine Korrekturvorrichtung (107d), die ein Erfassungsergebnis, das durch die Stoßerfassungsvorrichtung (101, 107a, 107b) erfasst wird, basierend auf einem Erfassungsergebnis, das durch die Kollisionspositionserfassungsvorrichtung (102-106, 202, 204, 206, 107c, 108) erfasst wird, korrigiert; und
eine Kollisionsbestimmungsvorrichtung (107e), die die Kollision basierend auf einem korrigierten Ergebnis bestimmt, das durch die Korrekturvorrichtung (107d) korrigiert ist.

2. Kollisionserfassungssystem nach Anspruch 1, wobei:
die Kollisionspositionserfassungsvorrichtung (102-106, 202, 204, 206, 107c, 108) eine Mehrzahl von Kontakten beinhaltet, von denen ein jeder durch den Stoß der Kollision eingeschaltet wird.

3. Kollisionserfassungssystem nach Anspruch 2, wobei:
zumindest einer von der Mehrzahl der Kontakte (202, 204, 206) einen ersten Erfassungsbereich aufweist, der mit einem zweiten Erfassungsbereich von einem anderen von der Mehrzahl der Kontakte (202, 204, 206) überlappt;
der zumindest eine von der Mehrzahl der Kontakte (202, 204, 206) eingeschaltet wird, wenn der Stoß der Kollision auf den ersten Erfassungsbereich ausgeübt wird; und
der andere von der Mehrzahl der Kontakte (202, 204, 206) eingeschaltet wird, wenn der Stoß der Kollision auf den zweiten Erfassungsbereich ausgeübt wird.

4. Kollisionserfassungssystem nach einem der Ansprüche 1 bis 3, wobei:
die Stoßerfassungsvorrichtung (101, 107a, 107b) zumindest entweder einen Lichtwellenleiter (101a), einen Ausdehnungsmesser, einen Drucksensor oder einen Beschleunigungssensor beinhaltet.

5. Kollisionserfassungssystem nach einem der Ansprüche 1 bis 4, wobei das Kollisionserfassungssystem ferner aufweist:
ein Fahrzeug, an dem das Kollisionserfassungssystem montiert ist, wobei das Kollisionserfassungssystem die Kollision mit dem Fahrzeug erfasst.

6. Kollisionserfassungssystem nach Anspruch 1, ferner aufweisend:
einen Stoßfänger (2) des Fahrzeugs, wobei die Stoßerfassungsvorrichtung (101, 107a, 107b) mit dem Stoßfänger (2) des Fahrzeugs gekoppelt ist.

7. Kollisionserfassungssystem nach Anspruch 2, wobei:
jeder von der Mehrzahl der Kontakte eingeschaltet ist, um eine korrespondierende Kollisionsposition zu erfassen, wenn des Stoß der Kollision auf die korrespondierende Kollisionsposition ausgeübt wird.

8. Schutzsystem, aufweisend:
das Kollisionserfassungssystem nach einem der Ansprüche 1 bis 7; und
eine Schutzvorrichtung (11 - 14), die entweder einen Fahrgast eines Fahrzeugs oder einen Fußgänger basierend auf dem Erfassungsergebnis der Kollisionspositionserfassungsvorrichtung (102 - 106, 202, 204, 206, 107c, 108) und einem Bestimmungsergebnis der Kollisionsbestimmungsvorrichtung (107e) schützt.

9. Kollisionserfassungssystem nach Anspruch 1, wobei die Kollisionsposition auf der Stoßfängerverstärkung (32) entweder mit einem rechten Endbereich, einem linken Endbereich, einem rechten gekrümmten Bereich, einem linken gekrümmten Bereich oder einem mittleren Bereich der Stoßfängerverstärkung (32) korrespondiert.

10. Kollisionserfassungssystem nach Anspruch 1, wobei verhindert wird, dass die Korrekturvorrichtung (107d) das Erfassungsergebnis korrigiert, das durch die Stoßerfassungsvorrichtung (101, 107a, 107b) erfasst wird, wenn das Erfassungsergebnis, das durch die Kollisionspositionserfassungsvorrichtung (102-106, 202, 204, 206, 107c, 108) erfasst wird, die Kollisionsposition anzeigt, die mit einem gekrümmten Bereich der Stoßfängerverstärkung (32) korrespondiert.

## Revendications

1. Système de détection de collision comprenant:
un dispositif (101, 107a, 107b) de détection de chocs qui détecte une amplitude d'un choc provoqué par une collision;
un dispositif (102-106, 202, 204, 206, 107c, 108) de détection de position de collision qui détecte une position de la collision sur un renfort (32) de pare-choc;
un dispositif (107d) de correction qui corrige un résultat de détection détecté par le dispositif (101, 107a, 107b) de détection de chocs sur la base d'un résultat de détection détecté par le dispositif (102-106, 202, 204, 206, 107c, 108) de détection de position de collision; et
un dispositif (107e) de détermination de collision qui détermine la collision sur la base d'un résultat corrigé qui est corrigé par le dispositif (107d) de correction.

2. Système de détection de collision selon la revendication 1, dans lequel:
le dispositif (102-106, 202, 204, 206, 107c, 108) de détection de position de collision comporte plusieurs contacts, chacun desquels est activé par le choc de la collision.

3. Système de détection de collision selon la revendication 2, dans lequel:
au moins l'un de la pluralité de contacts (202, 204, 206) a une première région de détection, qui se chevauche avec une deuxième région de détection d'un autre contact de la pluralité de contacts (202, 204, 206);
le contact au moins de la pluralité de contacts (202, 204, 206) est activé lorsque le choc de la collision est appliqué à la première région de détection; et
l'autre contact de la pluralité de contacts (202, 204, 206) est activé lorsque le choc de la collision est appliqué à la deuxième région de détection.

4. Système de détection de collision selon l'une quelconque des revendications 1 à 3, dans lequel:
le dispositif (101, 107a, 107b) de détection de chocs comporte au moins l'un parmi une fibre optique (101a), un extensomètre, d'un capteur de pression, et d'un capteur d'accélération.

5. Système de détection de collision selon l'une quelconque des revendications 1 à 4, le système de détection de collision comprenant en plus:
un véhicule, sur lequel le système de détection de collision est monté, où le système de détection de collision détecte la collision au véhicule.

6. Système de détection de collision selon la revendication 1, comprenant en plus:
un pare-choc (2) d'un véhicule, dans lequel le dispositif (101, 107a, 107b) de détection de chocs est couplé au pare-choc (2) du véhicule.

7. Système de détection de collision selon la revendication 2, dans lequel:
chacun de la pluralité de contacts est activé pour détecter une position de collision correspondante lorsque le choc de la collision est appliqué à la position de collision correspondante.

8. Système de protection comprenant:
le système de détection de collision selon l'une quelconque des revendications 1 à 7; et
un dispositif (11-14) de protection qui protège l'un d'un passager d'un véhicule et d'un piéton sur la base du résultat de détection du dispositif (102-106, 202, 204, 206, 107c, 108) de détection de position de collision et d'un résultat de détermination du dispositif (107e) de détermination de collision.

9. Système de détection de collision selon la revendication 1, dans lequel la position de collision sur le renfort (32) de pare-choc correspond à l'une d'une partie d'extrémité droite, d'une partie d'extrémité gauche, d'une partie incurvée droite, d'une partie incurvée gauche, et d'une partie médiane du renfort (32) de pare-choc.

10. Système de détection de collision selon la revendication 1, dans lequel le dispositif (107d) de correction est empêché de corriger le résultat de détection détecté par le dispositif (101, 107a, 107b) de détection de chocs lorsque le résultat de détection détecté par le dispositif (102-106, 202, 204, 206, 107c, 108) de détection de position de collision indique la position de collision, qui correspond à une partie incurvée du renfort (32) de pare-choc.
